# EUROPÄISCHE PATENTSCHRIFT

(11) **EP 4 326 993 B1**
(45) Veröffentlichungstag und Bekanntmachung des Hinweises auf die Patenterteilung: **04.11.2026**
(21) Anmeldenummer: 22725409.1
(22) Anmeldetag: 25.04.2022
(51) Int. Cl.: F16C 32/04

(54) **MAGNETISCHE LAGEREINRICHTUNG**
MAGNETIC BEARING DEVICE
DISPOSITIF DE SUPPORT MAGNÉTIQUE

(30) Priorität: 23.04.2021 DE 102021110415
(43) Veröffentlichungstag der Anmeldung: 28.02.2024
(73) Patentinhaber: Physik Instrumente (PI) SE & Co. KG, 76228 Karlsruhe (DE)
(72) Erfinder: GOOS, Alexander, 76275 Ettlingen (DE)
(74) Vertreter: Grünecker Patent- und Rechtsanwälte PartG mbB
(86) Internationale Anmeldenummer: PCT/EP2022/060822
(87) Internationale Veröffentlichungsnummer: WO 2022/223832

(56) Entgegenhaltungen:
- WO-A1-2019/023041
- DE-A1- 10 219 818
- DE-B3- 102004 050 328
- FR-A1- 2 756 335

## Beschreibung

Die vorliegende Erfindung bezieht sich auf eine magnetische Lagereinrichtung umfassend eine Statoranordnung mit mindestens einem Stator und einen Läufer, wobei der Stator eine Spulenvorrichtung mit mindestens einem Spulenkörper, Magnete und einer Flussleiteinrichtung aufweist, der Läufer relativ zur Statoranordnung zumindest entlang einer Längsrichtung der Statoranordnung bewegbar ist und die Statoranordnung und der Läufer so konfiguriert sind, dass bei einer Beaufschlagung der Spulenvorrichtung mit elektrischer Energie eine magnetische Kraft auf den Läufer aufbringbar ist, um zwischen der Statoranordnung und dem Läufer einen Luftspalt auszubilden, wobei die Statoranordnung mindestens zwei Statoren aufweist, die Flussleiteinrichtungen der mindestens zwei Statoren Flussleitstücke und Flussleitschienen aufweisen, wobei die Flussleitschienen an den Flussleitstücken angeordnet sind und zumindest teilweise gegenüber den oberen bzw. unteren Endflächen der Spulenvorrichtung der mindestens zwei Statoren vorstehen und wobei der geringste Abstand zwischen den Flussleiteinrichtungen, insbesondere der Flussleitschienen, der mindestens zwei Statoren in der Längsrichtung der Statoranordnung in einem Bereich zwischen Null und dem Abstand der Spulenvorrichtungen der mindestens zwei Statoren liegt, bevorzugt zwischen Null und 50 % des Abstands der Spulenvorrichtungen liegt, insbesondere zwischen Null und 10 % des Abstands der Spulenvorrichtungen liegt. Des Weiteren betrifft die vorliegende Erfindung ein Positioniersystem mit einer solchen magnetischen Lagereinrichtung.

Derartige magnetische Lagereinrichtungen und entsprechende Positioniersysteme sind im Stand der Technik für genaue Positionierungen von positionskritischen Vorrichtungen bekannt. Gattungsgemäße Positioniersysteme mit einer magnetischen Lagereinrichtung gemäß dem Oberbegriff des Anspruchs 1 sind aus der Veröffentlichung 1 "Design of Novel Permanent Magnet Biased Linear Magnetic Bearing and it's Application to High-Precision Linear Motion Stage", Sang-Ho Lee et al. und der Veröffentlichung 2 "The High Precision Linear Motion Table With a Novel Rare Earth Permanent Magnet Biased Magnetic Bearing Suspension", Dong-Chul Han et al. bekannt.

Die Veröffentlichung 1 beschreibt eine magnetische Lagereinrichtung, welche einen Stator und einen relativ zum Stator entlang einer Bewegungsrichtung bewegbaren Läufer umfasst. Die magnetische Lagereinrichtung ist im Wesentlichen aus Flussleitstücken, Magneten und Spulen zusammengesetzt und so konfiguriert, dass sie bei Beaufschlagung der Spulen mit elektrischer Energie eine magnetische Kraft auf den Läufer ausüben kann, die eine vollständige Kompensation der Gewichtskraft des Läufers ermöglicht und damit als Hubkraft auf den Läufer wirkt. Insbesondere erzeugen die stromdurchflossenen Spulen ein Magnetfeld, das in Wechselwirkung mit dem durch die Magneten erzeugten Magnetfeld steht. Die aktiven Elemente (Spulen) befinden sich im Läufer, was den Nachteil mit sich bringt, dass die zur elektrischen Energieversorgung erforderlichen Kabel am Läufer befestigt und bei einer Bewegung des Läufers relativ zum Stator mitgeführt werden müssen. Alternativ müsste eine drahtlose Energieübertragung bereitgestellt oder Energiespeicherelemente im Läufer angeordnet werden, was zu einer deutlichen Erhöhung des Läufergewichts führen würde. Weiterhin ist bei dieser Konfiguration eine Abführung des elektrisch induzierten Wärmeeintrags nur über die Luft und ggf. über Kabel möglich.

Die Veröffentlichung 2 beschreibt einen XY-Tisch, welcher ebenfalls einen Teil der Struktur der magnetischen Lagereinrichtung aus Veröffentlichung 1 umfasst. Allerdings sind die aktiven Elemente (Spulen) hier ein Teil des Stators, wodurch die elektrische Energie nicht mehr dem Läufer zugeführt werden muss. Nachteilig sind bei dieser Konfiguration jedoch der deutlich geringere Stellweg und die Veränderung der Kraftangriffspunkte gegenüber dem Läuferkoordinatensystem während der Bewegung des Läufers. Insbesondere sind die Kraftangriffspunkte aufgrund der geometrischen Dimensionen positionsabhängig, wodurch positionsabhängige Hebelarme bezüglich eines Drehmoments entstehen, welches nachteilig für die Regelung eines solchen Systems ist und ebenfalls zu einem positionsabhängigen Leistungsbedarf entlang der Bewegungsrichtung führt.

Darüber hinaus gibt es neuartige magnetische Lagereinrichtungen mit einem Stator und einem Läufer, bei denen die Spulen und die Magnete sowie eine zugehörige Flussleiteinrichtung ausschließlich im Stator vorgesehen sind und bei denen die Beaufschlagung der Spulen mit elektrischer Energie eine magnetische Kraft auf den Läufer aufprägt, die zwischen dem Stator und dem Läufer einen Luftspalt ausbildet. Dabei ist die Erstreckung des Läufers in Längsrichtung möglichst klein, um einen möglichst großen Stellweg entlang des Stators zu ermöglichen. Bei längeren Verfahrwegen ist es notwendig, den Läufer im Vergleich zur Statorbaugruppe möglichst kurz auszuführen, da längere Statoranordnungen aus Spulen, Magneten und Flussleiteinrichtungen zu hohen Verlustleistungen und einer schlechteren Motoreffizienz führen.

Ferner zeigt die FR 2 756 335 A1 ein Magnetlager zum Zentrieren einer Welle senkrecht zu einer Referenzachse einer radialen Anordnung von mehreren Polstücken, die ein Magnetfeld parallel zu den Zentrierachsen definieren und einen Luftspalt gegenüber der gelagerten Welle ausbilden. Neben einem radialen Magnetlager zur aktiven magnetischen Zentrierung einer sich drehenden Welle offenbart diese Anmeldung auch ein Magnetlager für lineare Bewegungen. Dieses lineare Magnetlager umfasst einen Stator mit zwei ferromagnetischen Platten, die parallel zueinander ausgerichtet sind und längsseitige Einschnitte aufweisen, wodurch die Statoranordnung in zwei Teile unterteilt wird. Dabei können die einzelnen Teile der Statoranordnung vollständig voneinander getrennt oder durch Brücken miteinander verbunden sein. Die Statoranordnung weist ein mittleres Flussleitstück in Form eines ferromagnetischen Stabs sowie oberhalb und unterhalb zwei identische Spulen mit entsprechenden Magnetkernen und zwei Magnete mit entgegengesetzter Magnetisierungsrichtung auf. Die Spulen und Magnete sind jeweils zwischen dem mittleren Flussleitstück und den äußeren Flussleitplatten angeordnet. Ein in Form eines ferromagnetischen Stabs ausgebildeter Läufer erstreckt sich zwischen den Flussleitplatten und parallel zu den Spulen und Magneten über die beiden Statorteile hinweg.

Der vorliegenden Erfindung liegt daher die Aufgabe zugrunde, eine magnetische Lagereinrichtung bereitzustellen, mit der lange Verfahrwege des Läufers in seiner Richtung der Längserstreckung des Stators bei nur geringer Verlustleistung möglich sind und die insbesondere eine sehr kompakte Bauform aufweist.

Diese Aufgabe wird bei einer gattungsgemäßen magnetischen Lagereinrichtung dadurch gelöst, dass der Läufer mindestens zwei Flussleitstücke umfasst, welche auf gegenüberliegenden Seiten der Statoranordnung angeordnet sind und durch ein zumindest teilweise nicht-magnetisches Element miteinander verbunden sind. Dabei sind die Spulenvorrichtungen ausschließlich in den Statoren der Statoranordnung vorgesehen, wodurch keine elektrische Energie auf den Läufer übertragen werden muss und der Läufer als passive Baugruppe in seinen Dimensionen und seinem Gewicht auf ein Minimum reduziert werden kann. Dadurch kann der Läufer bei aktiver Regelung ohne nennenswerte Rastkräfte und Rastmomente entlang des Stators bewegt werden. Für längere Verfahrwege des Läufers in Längsrichtung der Statoranordnung bzw. in der Bewegungsrichtung des Läufers entlang der Statoranordnung ist bei der vorliegenden Erfindung eine Statoranordnung mit mindestens zwei Statoren vorgesehen, wobei die Flussleiteinrichtungen der mindestens zwei Statoren sich nahezu durchgängig in der Längsrichtung entlang der Statoranordnung erstrecken. Im Vergleich zu einer Statoranordnung mit einem sehr lang ausgestalteten Stator ermöglicht die Anordnung von mindestens zwei Statoren deutlich geringere Verlustleistungen sowie einen besseren Wirkungsgrad, da der nutzbare Teil der Spulen durch die Länge der Rückschlüsse bestimmt wird. Weiter ermöglicht das Vorsehen mehrerer kurzer Statoren fertigungstechnische Vorteile, da mehrere baugleiche Teile eingesetzt werden können anstatt aufwendig produzierte Einzelbauteile. Um die bei der Übergabe des Läufers zwischen den mindestens zwei Statoren auftretenden Rastkräfte und Rastmomente sowie Kraftlöcher in Tragrichtung aufgrund der Unterbrechung der Flussleiteinrichtung an den Polflächen der Spulen zu minimieren, ist ein möglichst geringer Abstand zwischen den Flussleiteinrichtungen der mindestens zwei Statoren vorgesehen, um so die Statoren in Längsrichtung nahezu durchgängig mit flussleitendem Material auszugestalten. Entsprechend entsteht eine Art Schiene entlang der Längsrichtung der mindestens zwei oder mehr Statoren der Statoranordnung, so dass sich der magnetische Fluss einigermaßen homogen über den gesamten Bereich der Flussleiteinrichtung der Statoranordnung verteilt. Bei der Verwendung von mehreren Statoren können die einzelnen Bereiche der Statoranordnung einzeln angesteuert werden, so dass im Vergleich zu einem einzelnen Stator mit einer entsprechenden Länge mit der erfindungsgemäßen magnetischen Lagereinrichtung eine deutlich kleinere Verlustleistung möglich ist, da nur die relevanten Statoren bestromt werden müssen. Das Vorsehen von Flussleitschienen erleichtert die Ausbildung von im Wesentlichen durchgehenden Flussleiteinrichtungen der Statoranordnung und vermeidet dadurch das Auftreten großer Rastkräfte und Rastmomente. Dabei sind die Flussleitschienen bevorzugt im Bereich der Austritts- und Eintrittspunkte des magnetischen Flusses vorgesehen, um eine möglichst homogene Verteilung des magnetischen Flusses zu erreichen. Durch die erfindungsgemäße Konstruktion des Läufers umgreift dieser die Statoranordnung in einer sehr kompakten Bauform. Dabei ist es von Vorteil, dass das Verbindungselement aus einem nichtmagnetisierbaren Material hergestellt ist, um eine möglichst kompakte Bauform zu realisieren.

Eine bevorzugte Ausführungsform sieht vor, dass die Flussleiteinrichtungen der mindestens zwei Statoren sich in der Längsrichtung der Statoranordnung einander berühren oder in einem unmittelbaren Kontakt miteinander stehen. Der direkte Kontakt oder die stoffschlüssige Verbindung der Flussleiteinrichtungen an den jeweiligen Polflächen minimiert das Auftreten von Kraftlöchern in Tragrichtung beim Übergang zwischen den Statoren der Statoranordnung.

. Eine zweckmäßige Konstruktion der Statoranordnung sieht vor, dass die Flussleiteinrichtungen der mindestens zwei Statoren Flussleitstücke aufweisen, wobei die Flussleitschienen einteilig mit den Flussleitstücken ausgebildet sind. So können die Statoren der Statoranordnung mit gleichartigen Flussleiteinrichtungen ausgestaltet werden, so dass die Statoren leicht in beliebiger Anzahl für eine Statoranordnung kombiniert werden können.

Eine weitere Ausbildung sieht vor, dass die Flussleiteinrichtungen der mindestens zwei Statoren Flussleitstücke aufweisen, wobei die Flussleitschienen separat zu den Flussleitstücken ausgebildet sind und mit den Flussleitstücken in Kontakt stehen, wodurch für die Flussleitschienen andere Werkstoffe und Geometrien verwendet werden können. Beispielsweise können die Flussleitschienen für eine homogene Kraftverteilung trapezförmig ausgebildet sein. Dabei ist es von Vorteil, wenn die Flussleitschienen sich einteilig über mindestens zwei Statoren erstrecken, so dass zwischen den Flussleiteinrichtungen der mindestens zwei Statoren der Statoranordnung kein geringster Abstand existiert und ein unterbrechungsfreier magnetischer Fluss zwischen den mindestens zwei Statoren ermöglicht ist.

Eine besondere Ausführungsform sieht vor, dass sich die mindestens zwei Läufer-Flussleitstücke in der Längsrichtung der Statoranordnung über mindestens einen Stator der Statoranordnung erstrecken. Damit ist der Läufer länger als ein Stator und überdeckt entsprechend dauerhaft mindestens zwei Statoren zumindest teilweise. Dies ermöglicht eine gleichmäßigere Bewegung des Läufers entlang der Statoranordnung.

Eine alternative Ausbildung sieht vor, dass die mindestens zwei Läufer-Flussleitstücke in der Längsrichtung der Statoranordnung kürzer als ein Stator der Statoranordnung sind. Damit deckt der Läufer immer maximal nur einen Statorübergang ab und bei einer mehrteiligen Statoranordnung müssen maximal zwei Statoren mit elektrischer Energie versorgt werden, was zu einer insgesamt geringeren Verlustleistung führen kann.

Vorteilhafterweise kann sich jeder Spulenkörper in einer eigenen Ebene erstrecken, wobei vorzugsweise die Länge der Magnete und Flussleitstücke des Stators in Längsrichtung der Länge der parallel verlaufenden Abschnitte jedes Spulenkörpers entspricht. Durch eine im Wesentlichen gleiche Länge der Magnete, der Flussleitstücke und der parallel verlaufenden Abschnitte der Spulenkörper kann ein homogener Bereich erzeugt werden, der eine hohe Gleichförmigkeit in Bezug auf die Bewegung des Läufers ermöglicht.

In einer zusätzlichen Variante können die Magnete im Stator der Statoranordnung jeweils zwischen zwei Flussleitstücken der Flussleiteinrichtung angeordnet sein. Diese Anordnung verhindert eine Entmagnetisierung der Magnete durch das von der Spulenvorrichtung erzeugte Magnetfeld.

Darüber hinaus kann es sich als nützlich erweisen, wenn die Spulenvorrichtung übereinander angeordnete Spulenkörper aufweist und die Magnete in einer Ebene zwischen dem Spulenkörper angeordnet sind. Dabei erstreckt sich jeder Spulenkörper in einer eigenen Ebene parallel zu den Flussleitstücken der Läufer. Durch diese Anordnung der Magnete können Magnetfelder erzeugt werden, die gezielt miteinander oder gezielt gegeneinander wirken. Vorzugsweise entsprechen dabei die Längen der Magnete und der Flussleitstücke in Längsrichtung der Länge der parallel verlaufenden Abschnitte jedes Spulenkörpers.

Weiter kann es für eine magnetische Lagereinrichtung zweckmäßig sein, wenn jeder Spulenkörper zwischen zwei parallel verlaufenden Flussleitstücken der Flussleiteinrichtung angeordnet ist, die sich vorzugsweise in der Längsrichtung der Statoranordnung erstrecken, wobei insbesondere mindestens eines dieser Flussleitstücke einen Kopplungsabschnitt aufweist, mit dem es an eine weitere Struktur, vorzugsweise ein Gehäuse, angekoppelt werden kann. In dieser Konstruktion übernimmt das Flussleitstück nicht nur die Leitung des magnetischen Flusses, sondern dient gleichzeitig auch als Bauteil zur Anbringung der Statoranordnung an ein Gehäuse.

Eine sinnvolle Modifikation sieht vor, dass die Flussleiteinrichtung im Stator der Statoranordnung ein zentrales Flussleitstück mit kreuzförmigem Querschnitt aufweist und gegenüberliegende Abschnitte des zentralen Flussleitstücks in den Öffnungen von verschiedenen Spulenkörpern angeordnet sind. Diese Konfiguration ermöglicht eine zielgerichtete Leitung des magnetischen Flusses bei einer kompakten Bauweise. Es sind jedoch auch andere Querschnitte für das zentrale Flussleitstück denkbar, etwa solche mit einer plattenförmigen Geometrie, die den Vorteil deutlich reduzierter Herstellungskosten für ein zentrales Flussleitstück aufweisen.

Weiterhin kann es ein Vorteil sein, wenn die Magnete und/oder die Flussleitstücke einteilig oder mehrteilig ausgebildet sind. Je nach Aufbau der Statoranordnung können einteilig oder mehrteilig ausgebildete Magnete und Flussleitstücke den Aufwand bei der Montage der magnetischen Lagereinrichtung reduzieren.

Darüber hinaus betrifft die vorliegende Erfindung ein Positioniersystem mit einem Gehäuse, einer Plattform und mindestens einer der oben beschriebenen magnetischen Lagereinrichtung, wobei die Statoranordnung der magnetischen Lagereinrichtung mit dem Gehäuse und die Plattform mit dem Läufer gekoppelt ist. Mit einem derartigen Positioniersystem ist es möglich, die Plattform relativ zum Gehäuse bzw. zum Stator über einen längeren Weg in der Längsrichtung der Statoranordnung zu bewegen, ohne größere Rastkräfte oder Rastmoment zu überwinden und ohne größere Kraftlöcher in Tragrichtung zwischen den einzelnen Statoren der Statoranordnung zu kompensieren. Vorteilhafterweise kann das Positioniersystem einen Linearmotor umfassen, der sich relativ zum Gehäuse in Längsrichtung der Statoranordnung bewegt. Über die Wahl der Ansteuerparameter des Linearmotors sowie der magnetischen Lagereinrichtung kann eine hochpräzise Positionierung der Plattform erreicht werden.

Eine Spulenvorrichtung im Sinne der vorliegenden Erfindung umfasst im einfachsten Fall einen Spulenkörper, dessen Windungen konzentrisch und in einer gemeinsamen Ebene verlaufen, und umfasst daneben auch einen Spulenkörper, dessen konzentrische Windungen sich in mehreren unterschiedlichen Ebenen erstrecken. Hierbei können die Windungen des Spulenkörpers in einem isolierenden Material, beispielsweise einem Epoxidharz, eingebettet sein. Weiter ist es denkbar, einzelne Spulenkörper der Spulenvorrichtung elektrisch parallel oder seriell miteinander zu verbinden. Des Weiteren umfassen nicht-magnetische Materialien sowohl nicht-magnetisierbare als auch sehr schwach bzw. nicht dauerhaft magnetisierbare Materialien, jedoch sind insbesondere Materialien mit permanentmagnetischen bzw. ferromagnetischen Eigenschaften ausgeschlossen.

Im Folgenden werden nicht einschränkende Ausführungsformen der Erfindung anhand beispielhafter Zeichnungen näher erläutert. Es zeigen:
Fig. 1 eine perspektivische Darstellung eines Stators einer erfindungsgemäßen magnetischen Lagereinrichtung,
Fig. 2 eine geschnittene perspektivische Darstellung des Stators aus Fig. 1,
Fig. 3 eine perspektivische Darstellung einer Statoranordnung für eine erfindungsgemäße magnetische Lagereinrichtung,
Fig. 4A eine perspektivische Darstellung einer erfindungsgemäßen magnetischen Lagereinrichtung mit der Statoranordnung aus Fig. 3 und einem kurzen Läufer,
Fig. 4B eine perspektivische Darstellung einer erfindungsgemäßen magnetischen Lagereinrichtung mit der Statoranordnung aus Fig. 3 und einem langen Läufer,
Fig. 5 eine perspektivische Darstellung einer anderen Ausführungsform einer erfindungsgemäßen magnetischen Lagereinrichtung,
Fig. 6A eine perspektivische Darstellung einer Statoranordnung für eine erfindungsgemäße magnetische Lagereinrichtung,
Fig. 6B eine perspektivische Darstellung einer weiteren Ausführungsform einer erfindungsgemäßen magnetischen Lagereinrichtung mit der Statoranordnung aus Fig. 6A,
Fig. 6C eine perspektivische Darstellung der erfindungsgemäßen magnetischen Lagereinrichtung aus Fig. 6B mit einer anderen Flussleiteinrichtung,
Fig. 7A eine teilweise freigeschnittene Ansicht der magnetischen Lagereinrichtung aus Fig. 6C mit kurzen einteiligen Magneten,
Fig. 7B eine teilweise freigeschnittene perspektivische Ansicht der magnetischen Lagereinrichtung aus Fig. 6C mit mehrteiligen Magneten,
Fig. 7C eine teilweise freigeschnittene perspektivische Ansicht der magnetischen Lagereinrichtung aus Fig. 6C mit langen einteiligen Magneten,
Fig. 8 eine perspektivische Darstellung eines erfindungsgemäßen Positioniersystems,
Fig. 9 eine perspektivische Darstellung des Positioniersystems aus Fig. 8, wobei zur Veranschaulichung die Plattform nicht abgebildet ist, und
Fig. 10 eine perspektivische Darstellung des Positioniersystems aus Fig. 8, wobei zur Veranschaulichung das Gehäuse sowie die Statoren nicht abgebildet sind.

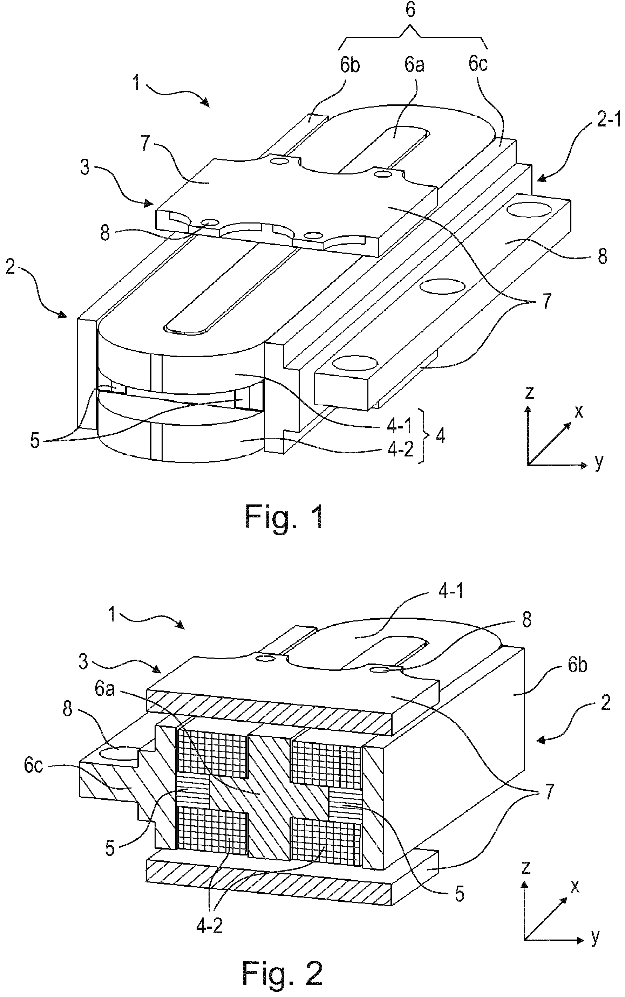

Anhand der in Fig. 1 gezeigten perspektivischen Darstellung eines einzelnen Stators 2-1 der Statoranordnung 2 einer magnetischen Lagereinrichtung 1 wird die Funktionsweise der magnetischen Lagereinrichtung 1 näher erläutert. Die magnetische Lagereinrichtung 1 umfasst eine Statoranordnung 2 mit mindestens zwei Statoren 2-1, 2-2 und einem Läufer 3, wobei Fig. 1 lediglich einen Stator 2-1 zeigt.

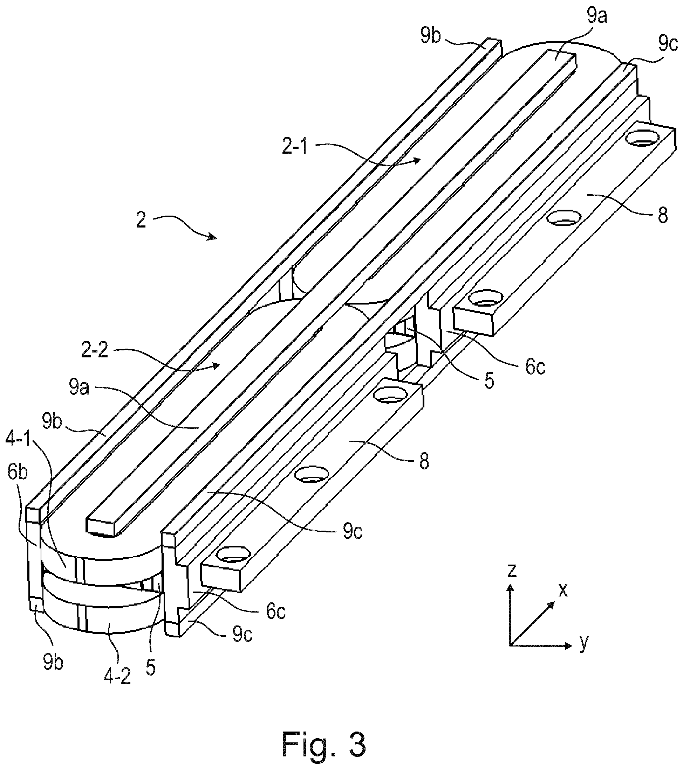

Der einzelne Stator 2-1 einer erfindungsgemäßen magnetischen Lagereinrichtung 1 umfasst eine Spulenvorrichtung 4 mit zwei separaten und elektrisch miteinander verbundenen Spulenkörpern 4-1, 4-2, die in z-Richtung übereinander und folglich in parallelen xy-Ebenen angeordnet sind. Es ist ebenso denkbar, die Spulenkörper nicht elektrisch miteinander zu verbinden. Die Länge der Spulenkörper 4-1, 4-2 erstreckt sich in x-Richtung. Der Stator 2-1 umfasst weiterhin eine Flussleiteinrichtung 6 mit drei Flussleitstücken 6a, 6b, 6c aus einem magnetisierbaren Stahl sowie vier Magnete 5, wobei lediglich zwei Magnete 5 an der Stirnseite des Stators 2-1 zu sehen sind. Die Magnete 5 erstrecken sich ebenfalls in x-Richtung. Wie in der Schnittansicht des Stators 2-1 in Fig. 2 deutlich ersichtlich flankieren die zwei äußeren Flussleitstücke 6b, 6c die Spulenkörper 4-1, 4-2 der Spulenvorrichtung 4, so dass sich diese in y-Richtung zwischen den beiden äußeren Flussleitstücken 6b, 6c befinden. Das dritte Flussleitstück 6a ist als ein zentrales Flussleitstück 6a in y-Richtung zwischen den äußeren Flussleitstücken 6b, 6c und in z-Richtung zwischen den Spulenkörpern 4-1, 4-2 angeordnet. In der vorliegenden Ausführungsform weist das zentrale Flussleitstück 6a einen kreuzförmigen Querschnitt auf und greift so mit vertikal gegenüberliegenden Abschnitten in die Öffnungen der Spulenkörper 4-1, 4-2 ein. Weiter ist eines der äußeren Flussleitstücke 6c mit einem Kopplungsabschnitt 8 versehen, der sich entlang des äußeren Flussleitstücks 6c in x-Richtung erstreckt und eine Anbindung an eine weitere Struktur, insbesondere an ein Gehäuse 12 eines Positioniersystems 11, ermöglicht. Jeweils zwei Magnete 5 sind in y-Richtung jeweils zwischen einem äußeren Flussleitstück 6b, 6c und dem zentralen Flussleitstück 6a und in z-Richtung zwischen den Spulenkörpern 4-1 und 4-2 angeordnet. Die Höhe der Flussleitstücke 6a, 6b, 6c in z-Richtung ist in dieser Ausführungsform so gewählt, dass die Flussleitstücke 6a, 6b, 6c bündig mit der oberen bzw. unteren Endfläche der Spulenkörper 4-1, 4-2 abschließen. Wie in den verschiedenen Ausführungsformen der magnetischen Lagereinrichtung 1 der vorliegenden Erfindung zu erkennen, kann die Flussleiteinrichtung 6 zusätzlich zu den Flussleitstücken 6a, 6b, 6c Flussleitschienen 9a, 9b, 9c aufweisen, siehe Fig. 3 bis 7C, die einteilig mit oder getrennt zu den Flussleitstücken 6a, 6b, 6c ausgebildet sind und sich über einen Stator 2-1 oder mehrere Statoren 2-1, 2-2 der Statoranordnung 2 erstrecken. Dabei können die Flussleitschienen 9a, 9b, 9c gegenüber den oberen bzw. unteren Endflächen der Spulenkörper 4-1, 4-2 vorstehen, was für bestimmte Anwendungsfälle, etwa bei Vakuumanwendungen, vorteilhaft ist, um den magnetischen Fluss so zu leiten, dass ein magnetischer Rückfluss innerhalb des Vakuums stattfindet, während die Spulenkörper 4-1, 4-2 und Magnete 5 außerhalb des Vakuums angeordnet sind. Darüber hinaus ist auch ein bündiges Abschließen der Flussleitschiene 9a, 9b, 9c oder ein Unterragen gegenüber den Endflächen denkbar und für gewisse Anwendungsfälle vorteilhaft.

Der Läufer 3 der magnetischen Lagereinrichtung 1 umfasst bevorzugt zwei identische Läufer-Flussleitstücke 7, die auf gegenüberliegenden Seiten des Stators 2-1 angeordnet sind, und ein zumindest teilweise nicht-magnetisches Element (nicht dargestellt), das die beiden Läufer-Flussleitstücke 7 miteinander verbindet. Der Läufer 3 ist dadurch so ausgebildet, dass er den Stator 2-1 umgreift. Die Läufer-Flussleitstücke 7 können ebenfalls Kopplungsabschnitte 8 aufweisen, die eine Anbindung an eine weitere Struktur, insbesondere eine Plattform 13 des Positioniersystems 11, ermöglichen. Die Läufer-Flussleitstücke 7 überragen in y-Richtung gesehen den Stator 2-1 leicht, wodurch nur geringe Rückstellkräfte in y-Richtung resultieren und ein verminderter Leistungseintrag in die magnetische Lagereinrichtung 1 für eine Bewegung des Läufers 3 entlang der y-Richtung ermöglicht wird. Weiterhin können die Läufer-Flussleitstücke 7 eine besondere Form aufweisen, beispielsweise eine E-Form, um translatorische Rückstellkräfte in y-Richtung und rotatorische Rückstellkräfte um die z-Achse zu erhalten. In der in Fig. 1 und Fig. 2 dargestellten Ausführungsform der Statoranordnung 2 einer magnetischen Lagereinrichtung 1 ist die Länge des Läufers 3 in x-Richtung deutlich kleiner als die Länge des Stators 2-1 in dieser Richtung.

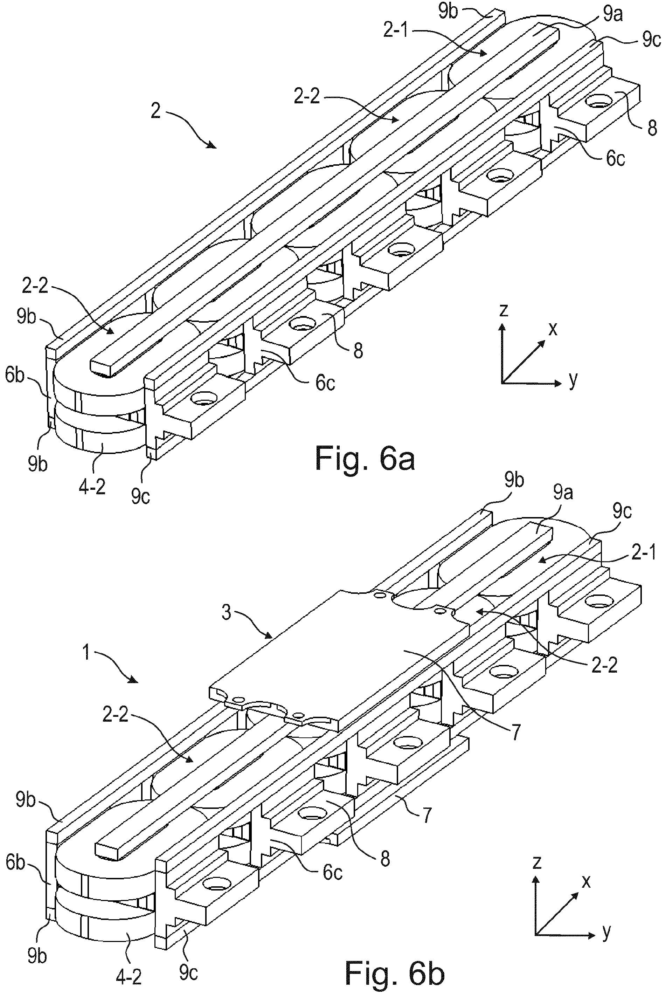

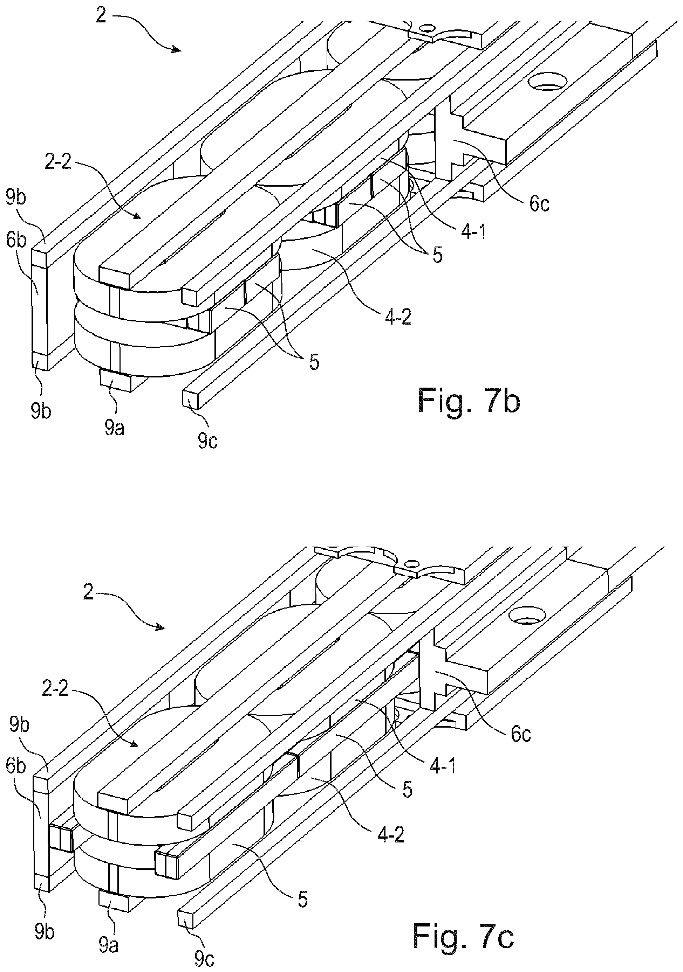

Im Allgemeinen sind die Formen und der Aufbau der Flussleiteinrichtung 6 und Magnete 5 der Statoren 2-1, 2-2 sowie der Läufer-Flussleitstücke 7 des Läufers 3 nicht auf die in den Fig. 1 bis 7 abgebildeten Anzahlen, Formen und Anordnungen beschränkt, sondern können jede zweckmäßige Form aufweisen, insbesondere auch Formen, die eine Integration der Statoranordnung 2 und des Läufers 3 in übergeordnete Strukturen vereinfachen, beispielsweise in das Gehäuse 12 oder die Plattform 13 des Positioniersystems 11. Dabei ist es bei den Flussleitstücken 6a, 6b, 6c und Flussleitschienen 9a, 9b, 9c sowie den Läufer-Flussleitstücken 7 denkbar, diese in Schichtbauweise oder als Laminataufbau auszuführen, wobei sich Schichten magnetisierbaren Materials und Schichten mit elektrisch nichtleitendem Material abwechseln. Bei den Spulenkörpern 4-1, 4-2 handelt es sich vorzugsweise um Drahtspulen, jedoch können auch Folienspulen oder gedruckte Spulen eingesetzt werden. Die Magnete 5 der Statoren 2-1, 2-2 können sowohl einteilig, als auch gestückelt sein und sich über unterschiedliche Längen in x-Richtung zwischen den Spulenkörpern 4-1, 4-2 erstrecken, beispielsweise über die Länge der äußeren Flussleitstücke 6b, 6c, siehe Fig. 6B, oder über die gesamte Länge der Spulenkörper 4-1, 4-2 bzw. der äußeren Flussleitschienen 9b, 9c, siehe Fig. 7C.

Durch die Beaufschlagung der Spulenkörper 4-1, 4-2 mit elektrischer Energie kann die magnetische Lagereinrichtung 1 gezielt angesteuert werden. Die stromdurchflossenen Spulenkörper 4-1, 4-2 erzeugen in der Flussleiteinrichtung 6 des Stators 2-1, d.h. in den Flussleitstücken 6a, 6b, 6c in Fig. 2, bzw. den Flussleitschienen 9a, 9b, 9c, sowie den Läufer-Flussleitstücken 7 des Läufers 3 entsprechende Magnetfelder, die in Wechselwirkung mit dem durch die Magnete 5 erzeugten Magnetfeld stehen. Diese Magnetfelder können miteinander oder gegeneinander wirken. Wirkt das Magnetfeld des oberen Spulenkörpers 4-1 dem Magnetfeld der Magnete 5 im oberen Teil der Flussleitstücke 6a, 6b, 6c entgegen, so kann das Magnetfeld des unteren Spulenkörpers 4-2 das Magnetfeld der Magnete 5 im unteren Teil der Flussleitstücke 6a, 6b, 6c durch die richtige Wahl der Ansteuerung (Stromrichtung) verstärken. Durch die gezielte Ansteuerung kann auf den Läufer 3 eine magnetische Hubkraft ausgeübt werden, die zur Ausbildung eines Luftspalts zwischen dem oberen Läufer-Flussleitstück 7 und der oberen Oberfläche des Stators 2-1 sowie zwischen dem unteren Läufer-Flussleitstück 7 und der unteren Oberfläche des Stators 2-1 führt. Insbesondere ist die Größe des Luftspalts, d.h. der Abstand zwischen den Oberflächen des Stators 2-1 und den Läufer-Flussleitstücken 7 des Läufers 3 in z-Richtung, durch die Anpassung der Ansteuerung einstellbar. Diese als Hubkraft wirkende magnetische Kraft ist somit in der Lage, die Gewichtskraft des Läufers 3 zu kompensieren bzw. den Läufer in z-Richtung zu positionieren. Bei gleichzeitiger Stabilisierung des Läufers 3 bezüglich seiner Rotationsfreiheitsgrade um die x- und y-Achse schwebt der Läufer 3 und kann relativ zur Statoranordnung 2 entlang der x-Richtung mechanisch reibungsfrei, d.h. frei von äußerer Reibung, verschoben werden.

Die perspektivische Darstellung in Fig. 3 zeigt eine Statoranordnung 2 für eine erfindungsgemäße magnetische Lagereinrichtung 1 mit mindestens zwei Statoren 2-1, 2-2. Jeder Stator 2-1, 2-2 umfasst eine Spulenvorrichtung 4 mit einem oberen und unteren Spulenkörper 4-1, 4-2, drei Flussleitstücken 6a, 6b, 6c aus einem magnetisierbaren Stahl und Magnete 5, die sich in x-Richtung erstrecken. Auf einer Seite der Statoranordnung 2 sind die beiden äußeren Flussleitstücke 6c der beiden Statoren 2-1, 2-2 mit Kopplungsabschnitten 8 versehen. Die Flussleiteinrichtung 6 dieser Statoranordnung 2 weist darüber hinaus Flussleitschienen 9a, 9b, 9c auf, die sich in x-Richtung parallel zu den Flussleitstücken 6a, 6b und 6c und in Kontakt mit diesen einteilig über die mindestens zwei Statoren 2-1, 2-2 der Statoranordnung 2 erstrecken. Dabei stehen die Flussleitschienen 9a, 9b, 9c gegenüber den oberen bzw. unteren Endflächen der Spulenkörper 4-1, 4-2 über. Die sich einteilig entlang der Statoranordnung 2 über die beiden Statoren 2-1, 2-2 hinweg erstreckenden Flussleitschienen 9a, 9b, 9c verbinden die einzelnen Flussleitstücke 6a, 6b, 6c der Statoren 2-1, 2-2 zu einer gemeinsamen Flussleiteinrichtung 6, so dass sich der magnetische Fluss einigermaßen homogen über den gesamten Bereich der Flussleitschienen 9a, 9b, 9c der Statoranordnung 2 verteilen kann.

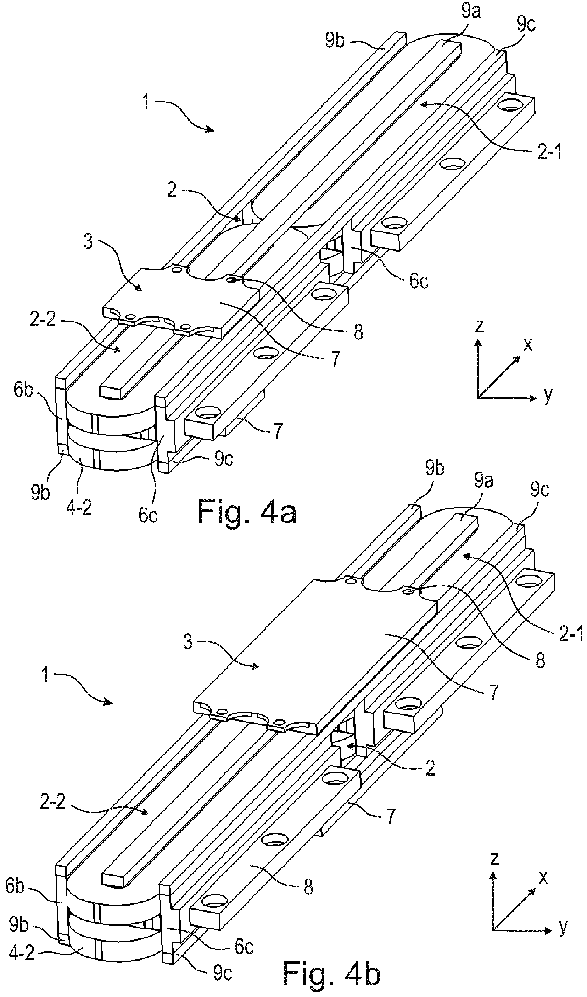

Die in Fig. 4A gezeigte erfindungsgemäße magnetische Lagereinrichtung 1 mit der in Fig. 3 gezeigten und oben beschriebenen Statoranordnung 2 mit mindestens zwei Statoren 2-1, 2-2 und einem Läufer 3 ermöglicht durch die einteilig ausgebildeten Flussleitschienen 9a, 9b, 9c, die sich entlang der mindestens zwei Statoren 2-1, 2-2 der Statoranordnung 2 erstrecken und die einzelne Flussleitstücke 6a, 6b, 6c der zwei Statoren 2-1, 2-2 miteinander verbinden, eine Bewegung des Läufers über die Grenzen der zwei Statoren 2-1, 2-2 der Spulenvorrichtung 4 hinweg, ohne bei einer Übergabe des Läufers 3 von einem Stator 2-1 auf den anderen Stator 2-2 größere Rastkräfte oder Rastmomente aufzuweisen und dabei auch Kraftlöcher in Tragrichtung des Läufers 3 zu vermeiden.

Eine zweite Ausführungsform einer solchen magnetischen Lagereinrichtung 1 mit der Statoranordnung 2 aus Fig. 3 ist in Fig. 4B dargestellt. In dieser Ausführungsform erstrecken sich die Läufer-Flussleitstücke 7 des Läufers 3 in x-Richtung über einen sehr viel größeren Längenbereich der Statoren 2-1, 2-2 in x-Richtung. Dies ermöglicht beim Übergang zwischen den zwei Statoren 2-1, 2-2 eine gleichmäßigere Bewegung in x-Richtung, jedoch reduziert sich der mögliche Verfahrweg des Läufers 3.

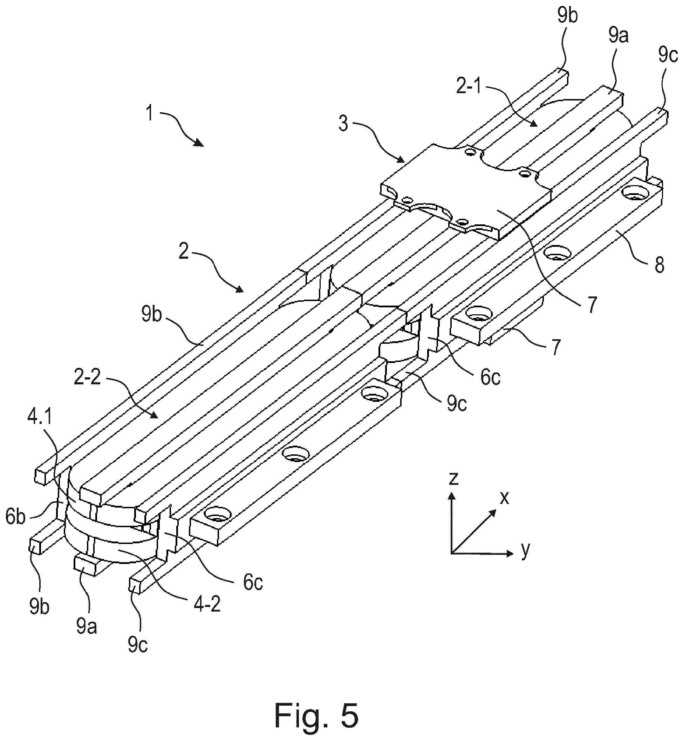

Fig. 5 beschreibt eine weitere Ausführungsform der magnetischen Lagereinrichtung 1 aus Fig. 4A mit einer anderen Statoranordnung 2. Die mindestens zwei Statoren 2-1, 2-2 dieser Statoranordnung 2 weisen voneinander getrennte Flussleiteinrichtungen 6 auf. Bei dieser Flussleiteinrichtung 6 erstrecken sich die Flussleitschienen 9a, 9b, 9c jeweils nur über die Länge der einzelnen Statoren 2-1, 2-2, wobei sie einteilig mit den Flussleitstücken 6a, 6b, 6c oder getrennt zu diesen ausgebildet sein können. Wie in Fig. 5 gut zu erkennen, berühren sich die einzelnen Flussleitschienen 9a, 9b, 9c der separaten Flussleiteinrichtungen 6 der einzelnen Statoren 2-1, 2-2 miteinander oder weisen einen nur sehr geringen Abstand zueinander auf, um einen möglichst gleichmäßigen magnetischen Fluss entlang der gesamten Statoranordnung 2 mit nur geringeren Unterbrechungen zu ermöglichen.

Eine weitere Statoranordnung 2 für eine erfindungsgemäße magnetische Lagereinrichtung 1 ist in Fig. 6A gezeigt. Im Gegensatz zu der in Fig. 3 gezeigten Statoranordnung 2 mit zwei Statoren 2-1, 2-2 sind hier fünf Statoren 2-1, 2-2 vorgesehen. Andere Anordnungen mit drei oder vier, oder aber mit mehr als fünf Statoren 2-1, 2-2 sind ebenso möglich. Die einteilig ausgebildeten Flussleitschienen 9a, 9b, 9c erstrecken sich über die gesamte Länge der Statoranordnung 2 und verbinden die einzelnen Flussleitstücke 6a, 6b, 6c der Statoren 2-1, 2-2 miteinander. Im Gegensatz zu den in Fig. 3 gezeigten Statoren 2-1, 2-2 sind die Statoren 2-1, 2-2 aus Fig. 6A in x-Richtung kürzer und können so vergleichsweise einfach zu unterschiedlich langen Statoranordnungen 2 miteinander kombiniert werden. Zudem wird durch die Unterteilung in mehrere kürzere Statoren eine deutlichere Reduzierung der Verlustleistung ermöglicht.

Fig. 6B zeigt eine erfindungsgemäße magnetische Lagereinrichtung 1 mit der Statoranordnung 2 aus Fig. 6A und einem Läufer 3, der in x-Richtung länger als ein einzelner Stator 2-1, 2-2 in x-Richtung ist und sich somit in x-Richtung immer über mehr als einen Stator 2-1, 2-2 erstreckt.

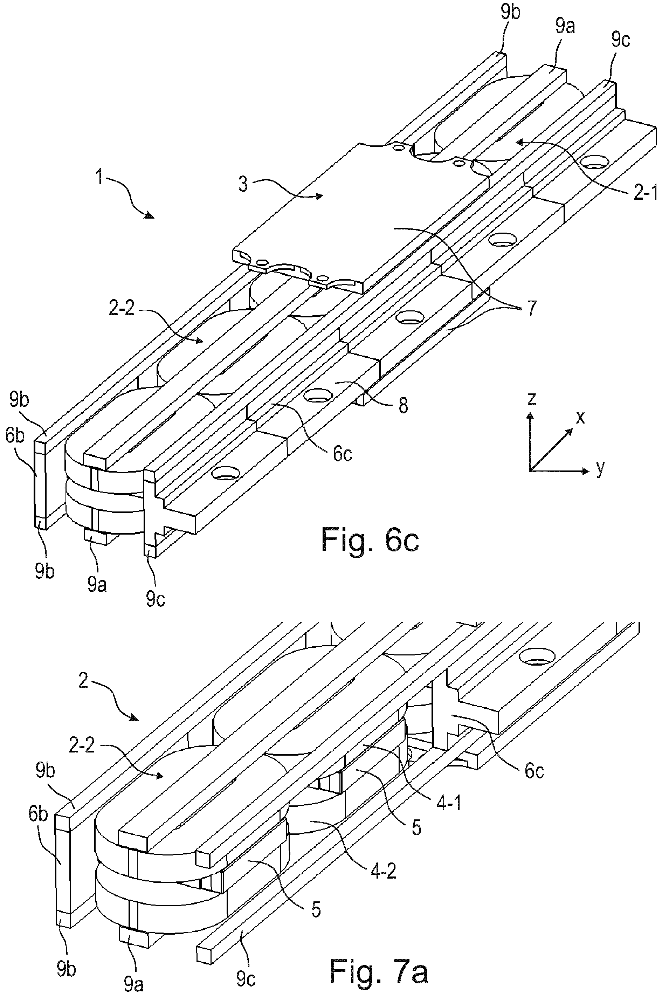

Eine weitere Ausführungsform einer erfindungsgemäßen magnetischen Lagereinrichtung 1 zeigt die Fig. 6C. Im Gegensatz zu den in den Fig. 6A und 6B gezeigten Statoranordnungen 2 mit einer Vielzahl von in Reihe angeordneten gleichartigen Statoren 2-1, 2-2 mit kurzen Flussleitstücken 6a, 6b, 6c, weisen die Statoren 2-1, 2-2 in Fig. 6C lange Flussleitstücke 6b, 6c auf, die sich in x-Richtung jeweils über die gesamte Länge der Statoren 2-1, 2-2 erstrecken, so dass sich die äußeren Flussleitstücke 6b, 6c am Übergang zwischen zwei Statoren 2-1, 2-2 einander berühren und die Flussleiteinrichtung 6 nicht nur über die sich einteilig entlang der gesamten Statoranordnung 2 erstreckenden Flussleitschienen 9b, 9c miteinander verbunden ist. Die Flussleitstücke 6a der Ausführungsform gemäß Fig. 6C sind kürzer als die Flussleitstücke 6b und 6c und berühren sich nicht gegenseitig. Es ist jedoch denkbar, dass die Flussleitstücke 6a so ausgeführt sind, dass sich angrenzende bzw. benachbarte Flussleitstücke 6a gegenseitig berühren.

Die Fig. 7A bis 7C zeigen verschiedene Ausführungsformen der Statoren 2-1, 2-2 der magnetischen Lagereinrichtung 1 aus Fig. 6C. Wie in der teilweise freigeschnittenen Darstellung der Statoranordnung 2 in Fig. 7A zu erkennen, erstrecken sich in dieser Ausführungsform die Magnete 5 in x-Richtung parallel zu den in den Öffnungen der Spulenkörper 4-1, 4-2 angeordneten mittleren Flussleitstücke 6a und enden in x-Richtung in deutlichem Abstand zu den Magneten 5 der angrenzenden Statoren 2-2. In der in Fig. 7B gezeigten Ausführungsform der Statoranordnung 2 erstrecken sich die Magnete 5 der Statoren 2-1, 2-2 ebenfalls parallel und gleich lang zum mittleren Flussleitstück 6a, jedoch sind diese Magnete 5 nicht in einem Stück, sondern in x-Richtung gestückelt ausgebildet. Fig. 7C zeigt eine weitere Statoranordnung 2 mit in x-Richtung einteilig ausgebildeten Magneten 5, jedoch erstrecken sich diese Magnete 5 in x-Richtung bis zu dem Magneten 5 der angrenzenden Statoren 2-2.

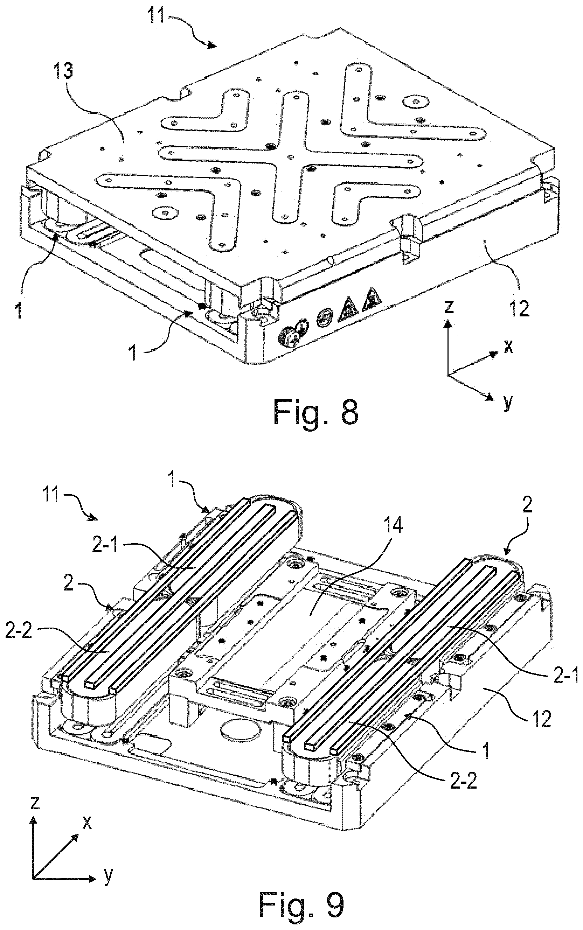

Fig. 8 bis 10 zeigen ein Positioniersystem 11, welches zwei magnetische Lagereinrichtungen 1 mit mindestens zwei Statoren 2-1, 2-2 gemäß den oben beschriebenen Ausführungsformen sowie optional magnetische y-Führungen, die eine Führung senkrecht zur Bewegungsrichtung der Läufer 3 in y-Richtung ermöglichen, ein Gehäuse 12, eine Plattform 13 und einen Linearmotor 14 umfasst. Statt magnetischer y-Führungen könnten in y-Richtung auch mechanische Führungen oder Luftlager verwendet werden. Wie in Fig. 9 zu erkennen, ist das Gehäuse 12 als eine rechteckige Gehäuseplatte ausgebildet, wobei die Platte an zwei gegenüberliegenden Seiten mit senkrechten Gehäusewänden versehen ist. An der Innenseite der Gehäusewände sind hintereinander die mindestens zwei Statoren 2-1, 2-2 der Statoranordnung 2 einer erfindungsgemäßen magnetischen Lagereinrichtung 1 angeordnet. Dabei können äußere Flussleitstücke 6c der Statoren 2-1, 2-2 mit Hilfe von Kopplungsabschnitten 8 an der entsprechenden Gehäusewand befestigt sein. In der Mitte der Gehäuseplatte ist die Spulenvorrichtung eines Linearmotors 14 angeordnet.

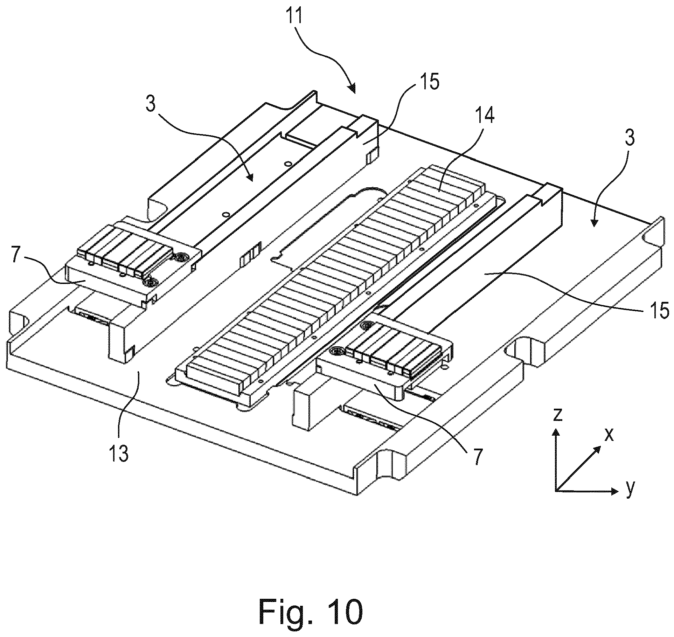

Die Plattform 13 ist mit jeweils einem Läufer 3 der zwei magnetischen Lagereinrichtungen 1 gekoppelt. Wie in Fig. 10 gezeigt, ist die Plattform 13 dabei sowohl mit dem unteren Läufer-Flussleitstück 7, als auch mit dem oberen Läufer-Flussleitstück 7 der beiden Läufer 3 gekoppelt. Die Kopplung mit den beiden oberen Läufer-Flussleitstücken 7 erfolgt über entsprechende Ausnehmungen in der Plattform 13, während die Kopplung mit den unteren Läufer-Flussleitstücken 7 über zwei Verbindungsstege 15 erfolgt, die auf der Unterseite der Plattform 13 angeordnet sind. Jeder Verbindungssteg 15 verbindet die Plattform 13 mit den unteren Läufer-Flussleitstücken 7. Weiterhin ist in der Mitte der Plattform 13 der Läufer-Teil des Linearmotors 14 angeordnet.

Mit dem oben beschriebenen Positionierungssystem 11 kann eine Positionierung der Plattform 13 ohne einen mechanischen Reibungsverlust, d.h. ohne den Einfluss einer äußeren Reibung, realisiert werden. Darüber hinaus kann über die Wahl der entsprechenden Ansteuerparameter eine hochpräzise Positionierung der Plattform 13 erreicht werden. Dabei ist die Anzahl der magnetischen Lagereinrichtung 1 im Positioniersystem 11 nicht auf zwei magnetische Lagereinrichtungen 1 und auch nicht auf zwei Statoren 2-1, 2-2 für jede magnetische Lagereinrichtung 1 beschränkt und kann je nach Anwendungsfall und Einbausituation angepasst werden.

### Bezugszeichenliste

- 1: Magnetische Lagereinrichtung
- 2: Statoranordnung
- 2-1,2-2: Stator
- 3: Läufer
- 4: Spulenvorrichtung
- 4-1,4-2: Spulenkörper
- 5: Magnet
- 6: Flussleiteinrichtung
- 6a,6b,6c: Flussleitstück
- 7: Läufer-Flussleitstück
- 8: Kopplungsabschnitt
- 9a,9b,9c: Flussleitschienen
- 11: Positioniersystem
- 12: Gehäuse
- 13: Plattform
- 14: Linearmotor
- 15: Verbindungssteg

## Patentansprüche

1. Magnetische Lagereinrichtung (1), umfassend eine Statoranordnung (2) mit mindestens einem Stator (2-1) und einen Läufer (3), wobei der Stator (2-1) eine Spulenvorrichtung (4) mit mindestens einem Spulenkörper (4-1,4-2), Magnete (5) und einer Flussleiteinrichtung (6) aufweist, der Läufer (3) relativ zur Statoranordnung (2) zumindest entlang einer Längsrichtung (x) der Statoranordnung (2) bewegbar ist und die Statoranordnung (2) und der Läufer (3) so konfiguriert sind, dass bei einer Beaufschlagung der Spulenvorrichtung (4) mit elektrischer Energie eine magnetische Kraft auf den Läufer (3) aufbringbar ist, um zwischen der Statoranordnung (2) und dem Läufer (3) einen Luftspalt auszubilden, wobei die Statoranordnung (2) mindestens zwei Statoren (2-1,2-2) aufweist, die Flussleiteinrichtungen (6) der mindestens zwei Statoren (2-1, 2-2) Flussleitstücke (6a-6c) und Flussleitschienen (9a-9c) aufweisen, wobei die Flussleitschienen (9a-9c) an den Flussleitstücken (6a-6c) angeordnet sind und zumindest teilweise gegenüber den oberen bzw. unteren Endflächen der Spulenvorrichtungen (4) der mindestens zwei Statoren (2-1,2-2) vorstehen, und wobei der geringste Abstand zwischen den Flussleiteinrichtungen (6), insbesondere der Flussleitschienen (9a-9c), der mindestens zwei Statoren (2-1, 2-2) in der Längsrichtung (x) der Statoranordnung (2) in einem Bereich zwischen Null und dem Abstand der Spulenvorrichtungen (4) der mindestens zwei Statoren (2-1,2-2) liegt, bevorzugt zwischen Null und 50 % des Abstands der Spulenvorrichtungen (4) liegt, insbesondere zwischen Null und 10 % des Abstands der Spulenvorrichtungen (4) liegt, **dadurch gekennzeichnet, dass** der Läufer (3) mindestens zwei Flussleitstücke (7) umfasst, welche auf gegenüberliegenden Seiten der Statoranordnung (2) angeordnet sind und durch ein zumindest teilweises nichtmagnetisches Element miteinander verbunden sind.

2. Magnetische Lagereinrichtung nach Anspruch 1,
**dadurch gekennzeichnet, dass** die Flussleitschienen (9a-9c) der Flussleiteinrichtungen (6) der mindestens zwei Statoren (2-1, 2-2) sich in der Längsrichtung (x) der Statoranordnung (2) einander berühren oder in einem unmittelbaren Kontakt miteinander stehen.

3. Magnetische Lagereinrichtung nach Anspruch 1 oder 2,
**dadurch gekennzeichnet, dass** zumindest ein Teil der Flussleitschienen (9a-9c) einteilig mit den Flussleitstücken (6a-6c) ausgebildet ist.

4. Magnetische Lagereinrichtung nach Anspruch 3,
**dadurch gekennzeichnet, dass** die Flussleitschienen (9a-9c) separat zu den Flussleitstücken (6a-6c) ausgebildet sind und mit den Flussleitstücken (6a-6c) in Kontakt stehen.

5. Magnetische Lagereinrichtung nach Anspruch 4,
**dadurch gekennzeichnet, dass** die Flussleitschienen (9a-9c) sich einteilig über mindestens zwei Statoren (2-1,2-2) erstrecken.

6. Magnetische Lagereinrichtung nach Anspruch 1,
**dadurch gekennzeichnet, dass** die mindestens zwei Flussleitstücke (7) des Läufers (3) sich in der Längsrichtung (x) der Statoranordnung (2) über mindestens einen Stator (2-1,2-2) der Statoranordnung (2) erstrecken.

7. Magnetische Lagereinrichtung nach Anspruch 1,
**dadurch gekennzeichnet, dass** die mindestens zwei Flussleitstücke (7) des Läufers (3) in der Längsrichtung (x) der Statoranordnung (2) kürzer als ein Stator (2-1,2-2) der Statoranordnung (2) sind.

8. Magnetische Lagereinrichtung nach einem der vorangehenden Ansprüche,
**dadurch gekennzeichnet, dass** die Magnete (5) im Stator (2-1,2-2) der Statoranordnung (2) jeweils zwischen zwei Flussleitstücken (6a-6c) der Flussleiteinrichtung (6) angeordnet sind.

9. Magnetische Lagereinrichtung nach einem der vorangehenden Ansprüche,
**dadurch gekennzeichnet, dass** die Spulenvorrichtung (4) übereinander angeordnete Spulenkörper (4-1) aufweist und die Magnete (5) in einer Ebene (xy) zwischen den Spulenkörpern (4-1) angeordnet sind.

10. Magnetische Lagereinrichtung nach einem der vorangehenden Ansprüche,
**dadurch gekennzeichnet, dass** jeder Spulenkörper (4-1) zwischen zwei parallel verlaufenden Flussleitstücken (6b, 6c) der Flussleiteinrichtung (6) angeordnet ist, die sich vorzugsweise in der Längsrichtung (x) der Statoranordnung (2) erstrecken, wobei vorzugsweise mindestens eines dieser Flussleitstücke (6c) einen Kopplungsabschnitt (8) aufweist, an dem es an eine weitere Struktur, vorzugsweise ein Gehäuse (12), angekoppelt werden kann.

11. Magnetische Lagereinrichtung nach einem der vorangehenden Ansprüche,
**dadurch gekennzeichnet, dass** die Flussleiteinrichtung (6) im Stator (2-1,2-2) der Statoranordnung (2) ein zentrales Flussleitstück (6a) mit kreuzförmigem Querschnitt aufweist und gegenüberliegende Abschnitte des zentralen Flussleitstücks (6a) in den Öffnungen von verschiedenen Spulenkörpern (4-1,4-2) angeordnet sind.

12. Magnetische Lagereinrichtung nach einem der vorangehenden Ansprüche,
**dadurch gekennzeichnet, dass** die Magnete (5) und/oder die Flussleitstücke (6a-6c) der Statoranordnung (2) einteilig oder mehrteilig ausgebildet sind.

13. Positioniersystem (11) mit einem Gehäuse (12), einer Plattform (13) und mindestens einer magnetischen Lagereinrichtung (1) nach einem der Ansprüche 1 bis 12, wobei die Statoranordnung (2) mit dem Gehäuse (12) gekoppelt ist und die Plattform (13) mit dem Läufer (3) gekoppelt ist.

## Claims

1. A magnetic bearing device (1) comprising a stator arrangement (2) having at least one stator (2-1) and a rotor (3), wherein the stator (2-1) comprises a coil apparatus (4) with at least one coil former (4-1,4-2), magnets (5) and a flux conducting device (6), the rotor (3) is movable relative to the stator arrangement (2) at least along a longitudinal direction (x) of the stator arrangement (2), and the stator arrangement (2) and the rotor (3) are configured such that, when electrical energy is applied to the coil apparatus (4), a magnetic force can be applied to the rotor (3) to form an air gap between the stator arrangement (2) and the rotor (3), wherein the stator arrangement (2) comprises at least two stators (2-1, 2-2), the flux conducting devices (6) of the at least two stators (2-1, 2-2) comprising flux conducting components (6a-6c) and flux conducting bars (9a-9c), the flux conducting bars (9a-9c) being arranged on the flux conducting components (6a-6c) and being at least partially arranged opposite the upper and lower end surfaces of the coil apparatuses (2-1, 2-2), respectively. lower end surfaces of the coil apparatuses (4) of the at least two stators (2-1, 2-2), and wherein the smallest distance between the flux conducting devices (6), in particular the flux conducting bars (9a-9c), of the at least two stators (2-1, 2-2), in the longitudinal direction (x) of the stator arrangement (2) being in a range between zero and the distance of the coil apparatuses (4) of the at least two stators (2-1, 2-2), preferably being between zero and 50% of the distance of the coil apparatuses (4), in particular being between zero and 10% of the distance of the coil apparatuses (4),
**characterized in that** the rotor (3) comprises at least two flux conducting components (7) arranged on opposite sides of the stator arrangement (2) and interconnected by an at least partial non-magnetic element.

2. The magnetic bearing device according to claim 1,
**characterized in that** the flux conducting bars (9a-9c) of the flux conducting devices (6) of the at least two stators (2-1, 2-2) are in contact with each other in the longitudinal direction (x) of the stator arrangement (2) or are in direct contact with each other.

3. The magnetic bearing device according to claim 1 or 2,
**characterized in that** at least a part of the flux conducting bars (9a-9c) is configured integrally with the flux conducting components (6a-6c).

4. The magnetic bearing device according to claim 3,
**characterized in that** the flux conducting bars (9a-9c) are configured separately from the flux conducting components (6a-6c) and are in contact with the flux conducting components (6a-6c).

5. The magnetic bearing device according to claim 4,
**characterized in that** the flux conducting bars (9a-9c) extend in one piece over at least two stators (2-1,2-2).

6. The magnetic bearing device according to claim 1,
**characterized in that** the at least two flux conducting components (7) of the rotor (3) extend in the longitudinal direction (x) of the stator arrangement (2) over at least one stator (2-1,2-2) of the stator arrangement (2).

7. The magnetic bearing device according to claim 1,
**characterized in that** the at least two flux conducting components (7) of the rotor (3) are shorter in the longitudinal direction (x) of the stator arrangement (2) than a stator (2-1,2-2) of the stator arrangement (2).

8. The magnetic bearing device according to one of the preceding claims,
**characterized in that** the magnets (5) in the stator (2-1,2-2) of the stator arrangement (2) are each arranged between two flux conducting components (6a-6c) of the flux conducting device (6).

9. The magnetic bearing device according to one of the preceding claims,
**characterized in that** the coil apparatus (4) has coil former (4-1) arranged one above the other and the magnets (5) are arranged in a plane (xy) between the coil former (4-1).

10. The magnetic bearing device according to any of the preceding claims,
**characterized in that** each coil former (4-1) is arranged between two parallel flux conducting components (6b, 6c) of the flux conducting device (6), preferably extending in the longitudinal direction (x) of the stator arrangement (2), wherein in particular at least one of said flux conducting components (6c) having a coupling portion (8) to which it can be coupled to a further structure, preferably a housing (12).

11. The magnetic bearing device according to any of the preceding claims,
**characterized in that** the flux conducting device (6) in the stator (2-1,2-2) of the stator arrangement (2) comprises a central flux conducting component (6a) having a cross-shaped cross-section, wherein opposite portions of the central flux conducting component (6a) are arranged in the openings of different coil former (4-1,4-2).

12. The magnetic bearing device according to any of the preceding claims,
**characterized in that** the magnets (5) and/or the flux conducting components (6a-6c) of the stator arrangement (2) are configured in one piece or in several pieces.

13. A positioning system (11) comprising a housing (12), a platform (13) and at least one magnetic bearing device (1) according to any of the claims 1 to 13, wherein the stator arrangement (2) is coupled to the housing (12) and the platform (13) is coupled to the rotor (3).

## Revendications

1. Dispositif de support magnétique (1) comprenant un agencement statorique (2) avec au moins un stator (2-1) et un rotor (3), dans lequel le stator (2-1) comporte un dispositif de bobine (4) avec au moins un corps de bobine (4-1, 4-2), des aimants (5) et un dispositif de guidage de flux (6), le rotor (3) est mobile par rapport à l'agencement statorique (2) au moins dans une direction longitudinale (x) de l'agencement statorique (2) et l'agencement statorique (2) et le rotor (3) sont configurés de telle sorte que lorsque le dispositif de bobine (4) est alimenté en énergie électrique, une force magnétique peut être appliquée au rotor (3) pour former un entrefer entre l'agencement statorique (2) et le rotor (3), dans lequel l'agencement statorique (2) comporte au moins deux stators (2-1, 2-2), les dispositifs de guidage de flux (6) desdits au moins deux stators (2-1, 2-2) comportent des pièces de guidage de flux (6a-6c) et des rails de guidage de flux (9a-9c), dans lequel les rails de guidage de flux (9a-9c) sont agencés sur les pièces de guidage de flux (6a-6c) et font saillie au moins partiellement par rapport aux faces d'extrémité supérieure et inférieure des dispositifs de bobine (4) desdits au moins deux stators (2-1, 2-2), et dans lequel la plus petite distance entre les dispositifs de guidage de flux (6), en particulier les rails de guidage de flux (9a-9c), desdits au moins deux stators (2-1, 2-2) dans la direction longitudinale (x) de l'agencement statorique (2) se situe dans une plage comprise entre zéro et la distance entre les dispositifs de bobine (4) desdits au moins deux stators (2-1, 2-2), de préférence entre zéro et 50 % de la distance entre les dispositifs de bobine (4), en particulier entre zéro et 10 % de la distance entre les dispositifs de bobine (4), **caractérisé en ce que** le rotor (3) comprend au moins deux pièces de guidage de flux (7), qui sont agencées de part et d'autre de l'agencement statorique (2) et sont reliées entre elles par un élément au moins partiellement non magnétique.

2. Dispositif de support magnétique selon la revendication 1,
**caractérisé en ce que** les rails de guidage de flux (9a-9c) des dispositifs de guidage de flux (6) desdits au moins deux stators (2-1, 2-2) se touchent dans la direction longitudinale (x) de l'agencement statorique (2) ou sont en contact direct entre eux.

3. Dispositif de support magnétique selon la revendication 1 ou 2,
**caractérisé en ce qu'**au moins une partie des rails de guidage de flux (9a-9c) est formée en une seule partie avec les pièces de guidage de flux (6a-6c).

4. Dispositif de support magnétique selon la revendication 3,
**caractérisé en ce que** les rails de guidage de flux (9a-9c) sont formés séparément des pièces de guidage de flux (6a-6c) et sont en contact avec les pièces de guidage de flux (6a-6c).

5. Dispositif de support magnétique selon la revendication 4,
**caractérisé en ce que** les rails de guidage de flux (9a-9c) s'étendent en une seule partie sur au moins deux stators (2-1, 2-2).

6. Dispositif de support magnétique selon la revendication 1,
**caractérisé en ce que** lesdites au moins deux pièces de guidage de flux (7) du rotor (3) s'étendent dans la direction longitudinale (x) de l'agencement statorique (2) sur au moins un stator (2-1, 2-2) de l'agencement statorique (2).

7. Dispositif de support magnétique selon la revendication 1,
**caractérisé en ce que** lesdites au moins deux pièces de guidage de flux (7) du rotor (3) sont plus courtes dans la direction longitudinale (x) de l'agencement statorique (2) qu'un stator (2-1, 2-2) de l'agencement statorique (2).

8. Dispositif de support magnétique selon l'une des revendications précédentes,
**caractérisé en ce que** les aimants (5) du stator (2-1, 2-2) de l'agencement statorique (2) sont agencés chacun entre deux pièces de guidage de flux (6a-6c) du dispositif de guidage de flux (6).

9. Dispositif de support magnétique selon l'une des revendications précédentes,
**caractérisé en ce que** le dispositif de bobine (4) comporte des corps de bobine (4-1) agencés l'un au-dessus de l'autre et les aimants (5) sont agencés dans un plan (xy) entre les corps de bobine (4-1).

10. Dispositif de support magnétique selon l'une des revendications précédentes,
**caractérisé en ce que** chaque corps de bobine (4-1) est agencé entre deux pièces de guidage de flux parallèles (6b, 6c) du dispositif de guidage de flux (6) qui s'étendent de préférence dans la direction longitudinale (x) de l'agencement statorique (2), dans lequel de préférence au moins l'une desdites pièces de guidage de flux (6c) comporte une section de couplage (8) via laquelle elle peut être couplée à une autre structure, de préférence un boîtier (12).

11. Dispositif de support magnétique selon l'une des revendications précédentes,
**caractérisé en ce que** le dispositif de guidage de flux (6) du stator (2-1, 2-2) de l'agencement statorique (2) comporte une pièce de guidage de flux centrale (6a) de section transversale cruciforme, et les sections opposées de la pièce de guidage de flux centrale (6a) sont agencées dans les ouvertures de différents corps de bobine (4-1, 4-2) .

12. Dispositif de support magnétique selon l'une des revendications précédentes,
**caractérisé en ce que** les aimants (5) et/ou les pièces de guidage de flux (6a-6c) de l'agencement statorique (2) sont formés en une seule partie ou en plusieurs parties.

13. Système de positionnement (11) comprenant un boîtier (12), une plateforme (13) et au moins un dispositif de support magnétique (1) selon l'une des revendications 1 à 12, dans lequel l'agencement statorique (2) est couplé au boîtier (12) et la plateforme (13) est couplée au rotor (3) .
